# EUROPÄISCHE PATENTSCHRIFT

(11) **EP 1 280 941 B1**
(45) Veröffentlichungstag und Bekanntmachung des Hinweises auf die Patenterteilung: **05.01.2005**
(21) Anmeldenummer: 01938196.1
(22) Anmeldetag: 08.05.2001
(51) Int. Cl.: C22B 3/44, C02F 1/62, C02F 9/00, C02F 1/52, C01G 49/10

(54) **VERFAHREN ZUM ENTFERNEN VON NICKEL- UND BLEIIONEN AUS EISENSALZLÖSUNGEN**
METHOD FOR ELIMINATING NICKEL IONS AND LEAD IONS FROM FERROUS SALT SOLUTIONS
PROCEDE PERMETTANT D'ELIMINER LES IONS DE NICKEL ET DE PLOMB DE SOLUTIONS DE SELS FERREUX

(30) Priorität: 10.05.2000 DE 10022867
(43) Veröffentlichungstag der Anmeldung: 05.02.2003
(73) Patentinhaber: KRONOS TITAN GmbH, 51373 Leverkusen (DE)
(72) Erfinder: SCHINKITZ, Dieter, 51381 Leverkusen (DE)
(86) Internationale Anmeldenummer: PCT/EP2001/005178
(87) Internationale Veröffentlichungsnummer: WO 2001/086010

(56) Entgegenhaltungen:
- DE-A- 4 243 559
- US-A- 3 740 331
- US-A- 4 102 784
- US-A- 4 503 017
- DATABASE WPI Section Ch, Week 198732 Derwent Publications Ltd., London, GB; Class M25, AN 1987-226841 XP002177659 & SU 1 275 055 A (KRASY NONFERR METAL), 7. Dezember 1986 (1986-12-07)

## Beschreibung

Die Erfindung richtet sich auf ein Verfahren zum Entfernen von Nickel- und Bleiionen aus Eisen(II)salzlösungen durch Fällen und Abtrennen entsprechender Sulfide.

Generell erfolgt eine Herabsetzung der Schwermetallionenkonzentration (Reinigung) in Lösungen durch chemische Ausfällung entsprechender Hydroxide oder Karbonate. Im industriellen Maßstab wird jedoch die auf Grund des niedrigen Löslichkeitsproduktes erwartete Reinigungswirkung aus vielerlei Gründen oft nicht erreicht; von Einfluß sind die Zeit (Unvollständigkeit der Reaktion), der Gehalt anderer in der Lösung vorhandener Stoffe (deren "Ionenstärke"), mögliche Komplexbildungen (Umwandlungen in Verbindungen mit höherer Löslichkeit) und vor allem die Handhabbarkeit der Niederschläge (z. B. deren Filtrierbarkeit).

Eine Fällung von Schwermetallionen als Schwermetallsulfide ist i. d. R. auch möglich und manchmal bevorzugt, da oft schon im sauren Bereich die Löslichkeit der Sulfide hinreichend niedrig ist, siehe z. B. D. Bhattacharyya et al., Precipitation of heavy metals with sodium sulfide: Bench-scale and full-scale experimental results, American Institute of Chemical Engineers Symposium Series 209, Vol. 77 (1981) 31-38. In L. Bauch et al., Elimination von Blei und Nickel aus salzreichen Wässern durch Sulfidfällung und Flockung, Vom Wasser, 75, 375-392 (1990), wird jedoch darauf hingewiesen, dass die nach den thermodynamischen Daten zu erwartenden niedrigen Restkonzentrationen vor allem von Nickel in salzreichen Abwässern praktisch nicht erreicht werden.

Das Dokument US-A-4 503 017 beschreibt die Reinigung schwermetallverunreinigter Industrieabwässer durch Sulfidausfällung in zwei Stufen bei pH-Werten von 1.0-2.5 und anschliessend 4.0-4.3.

Aufgabe der Erfindung war ein Verfahren im industriellen Maßstab zur weitgehenden Entfernung von Blei- und Nickelionen aus Eisensalzlösungen, wobei sich die Eisenionen überwiegend im zweiwertigen Zustand befinden. Unter weitgehend soll verstanden werden, dass bei Nickel 30 mg pro I und bei Blei 7,5 mg pro I sicher unterschritten werden, aber möglichst wenig gelöstes Eisen dabei mit ausfallen soll.

Die Aufgabe wird von einem Verfahren zum Entfernen von Nickel- und Bleiionen aus Eisen(II)salzlösungen durch Fällen und Abtrennen entsprechender Sulfide gelöst, das dadurch gekennzeichnet ist, dass im sauren Bereich ein Alkalisulfid überstöchiometrisch zugegeben wird und nach einer Verweilzeit der Niederschlag abfiltriert wird unter den Bedingungen wie definiert im Anspruch 1.

Entgegen den bisherigen Erfahrungen können so in großtechnischem Maßstab wirtschaftlich und sicher Eisen(II)salzlösungen gereinigt werden. Auch in gesättigten Eisen(II)salzlösungen werden die Nickelionengehalte von 30 mg/l unterschritten, Werte die beispielsweise in Deutschland beim Einsatz von Eisen(II)salzlösungen zur Wasseraufbereitung eingehalten werden müssen.

Das erfindungsgemäße Verfahren ist nicht auf verhältnismäßig "reine" wässrige Lösungen mit einem geringen Blei- und Nickelionengehalt anwendbar. Es ist ein hinreichend hoher Gehalt bis hin zur Sättigung an Eisen(II)ionen für das Verfahren erforderlich, was bei technischen Lösungen, die beispielsweise beim Stahlbeizen oder beim Auslaugen des bei der Herstellung von Titandioxid nach dem Chloridverfahren anfallenden Zyklonstaubes entstehen, gegeben ist.

In solchen technischen Eisen(II)salzlösungen sind stets - wenn auch oft in geringem Umfang - Eisen(III)ionen vorhanden. Sie werden eher als die Eisen(II)ionen schon im sauren Bereich gefällt und scheinen in einer Reaktionskette als "Sulfidüberträger" auf gelöstes Nickel zu fungieren. Dieses (langsam gebildete) Ni₂S₃ (mit extrem niedrigem Löslichkeitsprodukt) wird aus der Lösung entfernt, und diese Langsamkeit der Reaktion dürfte der Grund für die unbedingt einzuhaltende und überaus lange Verweilzeit von größenordnungsmäßig einer Stunde sein.

Besonders geeignet als Fällmittel sind wässrige Lösungen von Natriumhydrogensulfid oder Natriumsulfid. Bei den Reaktionsbedingungen wird wegen der hohen Eisenkonzentration kein Schwefelwasserstoff freigesetzt.
Die Erfindung ist im Folgenden beispielhaft beschrieben.
Eine typische "belastete" Eisen(II)chloridlösung aus Zyklonstaub, wie er bei der Herstellung von Titandioxid nach dem Chloridprozess anfällt, hat folgende Zusammensetzung: Fe 8,8 Gew.-%, Mn 1,61 Gew.-%, HCl 2,6 Gew.-%, Ti 410 ppm, Cr 1170 ppm, V 2420 ppm, Nb 580 ppm, Zr 1146 ppm, Ni 95 ppm, Pb 16 ppm. Durch selektive Fällung mit einer Kalksteinmehl-Suspension (wie beispielsweise in der DE 42 43 559 A1 beschrieben) bei einem pH-Wert um 3 werden die drei- und höherwertigen Schwermetalle, insbesondere Chrom, Vanadium, Titan und Zirkonium als Hydroxide ausgefällt und abfiltriert. Die in Lösung verbleibenden von der Hydroxidfällung nicht erfassten Schwermetallionen umfassen das gesamte Nickel und das Blei der Ursprungslösung, so dass eine nach DE 42 43 959 A1 vorgereinigte Lösung die vom Gesetzgeber festgelegten Grenzwerte überschreitet.

Gemäß der Erfindung gelingt die erforderliche Herabsetzung der Nickelund Bleiionenkonzentration, wenn nach der Vorneutralisation vorzugsweise mit Dolomitsteinmehl, also noch im sauren Bereich, etwa bei pH 3, Alkalisulfid in die (gesättigte) Eisen(II)salzlösung (etwa 8,5 Gew.-% Fe) zudosiert wird. In einer typischen Anordnung wird eine mit Kalksteinmehl vorneutralisierte Eisenlösung (16 m³ Charge) in einen Behälter abgelassen und während dieser Zeit 100 l Alkalisulfidlösung (14 %ig) kontinuierlich zudosiert. Die Zugabemenge an Alkalisulfid wird zuvor einmal empirisch ermittelt und beibehalten; bezogen allein auf die Summe von Nickel und Blei ist die Menge des Alkalisulfides überstöchiometrisch dosiert. Da jedoch die mitgefällten Eisen(III)ionen (und partiell auch Mangan) zu berücksichtigen sind, liegt der stöchiometrische Überschuß in engen Grenzen. Im Anschluß an die Sulfidzugabe ist eine Verweilzeit von einer Stunde erforderlich, um die Ausfällung zu vervollständigen. Danach erfolgt eine Filtration der Schwermetallsulfide gemeinsam mit den Schwermetallhydroxiden, die effektiv mittels einer Membranfilterpresse durchgeführt werden kann. Das Filtrat aus der Filterpresse der nunmehr gereinigten Eisen(II)chloridlösung enthält Nickel und Blei in einer Konzentration, die den gesetzlichen Auflagen genügt.
Ein wesentlicher Vorteil dieses Verfahrens ist, dass die in DE 42 43 559 A1 aufgezeigte sehr gute Filtrierbarkeit "kugelförmiger" Hydroxide durch die Sulfidfällung nicht beeinträchtigt wird.

Wird von NaHS-Sackware ausgegangen, tritt beim Ansetzen der Alkalisulfidlösung eher eine Geruchsbelästigung durch Schwefelwasserstoff auf als bei Na₂S-Sackware.
Die Ergebnisse sind im Einzelnen in der Tabelle 1 dargestellt. Da die Reinigungswirkung in beiden Fällen vergleichbar gut ist, sprechen die Betriebsversuche für die Verwendung von Na₂S-Schuppen.

**Tabelle 1**

| **Lösung aus:** | **NaHS** | **Na**_{**2**}**S** |
|---|---|---|
| zugegebene Menge pro 200 t - Ansatz | 11,6 kg (entspricht 600 ppm NaHS 70 - 72 %) | 20 kg (entspricht 1000 ppm Na₂S 60 - 62 %) |
| mittlerer Sulfidionengehalt [ppm] | 240 | 246 |
| Ni-Gehalt der Ausgangsproben [mg/mol Fe] | 35 - 50 | |
| Pb-Gehalt der Ausgangsproben [mg/mol Fe] | 6,6 - 8,4 | |
| mittlerer Ni-Gehalt nach Abreicherung [mg/mol Fe] | 16 | 7,5 |
| mittlerer Pb-Gehalt nach Abreicherung [mg/mol Fe] | 4,9 | 4,7 |

## Patentansprüche

1. Verfahren zum Entfernen von Nickel- und Bleiionen aus Eisen(II)salzlösungen durch Fällen und Abtrennen entsprechender Sulfide **dadurch gekennzeichnet, dass**
a) die Eisen(II)salzlösung eine hohe Konzentration bis hin zur Sättigung an Eisen(II)ionen aufweist,
b) der pH-Wert im Bereich 3 bis 3,5 liegt,
c) ein Alkalisulfid überstöchiometrisch zugegeben wird,
d) nach einer Verweilzeit von etwa einer Stunde der Niederschlag abfiltriert wird.

2. Verfahren nach Anspruch 1 **dadurch gekennzeichnet, dass**
die Eisen(II)salzlösung durch Auslaugen des bei der Herstellung von Titandioxid nach dem Chloridverfahren anfallenden Zyklonstaubes entstanden ist.

3. Verfahren nach Anspruch 1 **dadurch**
**gekennzeichnet, dass**
die Eisen(II)salzlösung eine Stahlbeizlösung ist.

4. Verfahren nach einem oder mehreren der Ansprüche 1 bis 3 **dadurch gekennzeichnet, dass**
als Alkalisulfid Natriumhydrogensulfid zugegeben wird.

5. Verfahren nach einem oder mehreren der Ansprüche 1 bis 3 **dadurch gekennzeichnet, dass**
als Alkalisulfid Natriumsulfid zugegeben wird.

6. Verfahren nach einem oder mehreren der Ansprüche 1 bis 5 **dadurch gekennzeichnet, dass**
das Alkalisulfid als wässrige Lösung zugegeben wird.

7. Verfahren nach einem oder mehreren der Ansprüche 1 bis 6 **dadurch gekennzeichnet, dass**
die eingesetzte Menge Alkalisulfid für eine gesättigte Eisen(II)salzlösung im Bereich 600 bis 1000 ppm liegt.

8. Verfahren nach einem oder mehreren der Ansprüche 1 bis 7 **dadurch gekennzeichnet, dass**
der Restgehalt an Nickel nach der Sulfidfällung unter 30 mg pro Liter Eisensalzlösung liegt.

9. Verfahren nach einem oder mehreren der Ansprüche 1 bis 7 **dadurch gekennzeichnet, dass**
der Restgehalt an Blei nach der Sulfidfällung unter 7,5 mg pro Liter Eisensalzlösung liegt.

## Claims

1. Method for removing nickel and lead ions from ferrous salt solutions by precipitation and separation of corresponding sulphides, **characterised in that**
a) the ferrous salt solution displays a high concentration of ferrous ions, up to saturation level,
b) the pH value is in the range from 3 to 3.5,
c) an alkali sulphide is added in hyperstoichiometric quantities,
d) the precipitate is filtered off after a residence time of roughly one hour.

2. Method according to Claim 1, **characterised in that**
the ferrous salt solution is produced by leaching of the cyclone dust occurring during the production of titanium dioxide by the chloride process.

3. Method according to Claim 1, **characterised in that**
the ferrous salt solution is a steel pickling solution.

4. Method according to one or more of Claims 1 to 3, **characterised in that**
sodium hydrogensulphide is added as the alkali sulphide.

5. Method according to one or more of Claims 1 to 3, **characterised in that**
sodium sulphide is added as the alkali sulphide.

6. Method according to one or more of Claims 1 to 5, **characterised in that**
the alkali sulphide is added in the form of an aqueous solution.

7. Method according to one or more of Claims 1 to 6, **characterised in that**
the quantity of alkali sulphide added for a saturated ferrous salt solution is in the range from 600 to 1000 ppm.

8. Method according to one or more of Claims 1 to 7, **characterised in that**
the residual nickel content following sulphide precipitation is less than 30 mg per litre ferrous salt solution.

9. Method according to one or more of Claims 1 to 7, **characterised in that**
the residual lead content following sulphide precipitation is less than 7.5 mg per litre ferrous salt solution.

## Revendications

1. Procédé pour l'élimination d'ions de nickel et de plomb dans des solutions de sel ferreux par précipitation et séparation des sulfures correspondants, **caractérisé par le fait que**
a) la solution de sel ferreux présente une concentration élevée en ions de fer (II) qui peut aller jusqu'à la saturation,
b) la valeur pH se situe entre 3 et 3,5,
c) un sulfure alcalin est ajouté dans une proportion supérieure à la quantité stoechiométrique
d) le précipité est filtré après un temps de séjour d'environ une heure.

2. Procédé selon la revendication 1 **caractérisé par le fait que**
la solution de sel ferreux a été obtenue par lixiviation de la poussière de cyclone produite lors de la fabrication de dioxyde de titane selon le procédé au chlorure.

3. Procédé selon la revendication 1 **caractérisé par le fait que**
la solution de sel ferreux est une solution décapante d'acier.

4. Procédé selon une ou plusieurs des revendications 1 à 3 **caractérisé par le fait que**
du bisulfure de sodium est ajouté comme sulfure alcalin.

5. Procédé selon une ou plusieurs des revendications 1 à 3 **caractérisé par le fait que**
du sulfure de sodium est ajouté comme sulfure alcalin.

6. Procédé selon une ou plusieurs des revendications 1 à 5 **caractérisé par le fait que**
le sulfure alcalin est ajouté sous forme de solution aqueuse.

7. Procédé selon une ou plusieurs des revendications 1 à 6 **caractérisé par le fait que**
la quantité de sulfure alcalin utilisée pour une solution de sel ferreux saturée se situe entre 600 et 1000 ppm.

8. Procédé selon une ou plusieurs des revendications 1 à 7 **caractérisé par le fait que**
la teneur résiduelle en nickel après la précipitation du sulfure est inférieure à 30 mg par litre de solution de sel de fer.

9. Procédé selon une ou plusieurs des revendications 1 à 7 **caractérisé par le fait que**
la teneur résiduelle en plomb après la précipitation du sulfure est inférieure à 7,5 mg par litre de solution de sel de fer.
